# EUROPÄISCHE PATENTSCHRIFT

(11) **EP 3 224 130 B1**
(45) Veröffentlichungstag und Bekanntmachung des Hinweises auf die Patenterteilung: **21.11.2018**
(21) Anmeldenummer: 15766823.7
(22) Anmeldetag: 21.09.2015
(51) Int. Cl.: B62M 6/45

(54) **FAHRZEUG MIT ELEKTRISCHEM ANTRIEB, INSBESONDERE ELEKTROFAHRRAD, UND VERFAHREN ZUM BETREIBEN EINES DERARTIGEN FAHRZEUGS**
VEHICLE WITH AN ELECTRIC DRIVE, IN PARTICULAR AN ELECTRIC BICYCLE, AND METHOD FOR OPERATING SUCH A VEHICLE
VÉHICULE À ENTRAÎNEMENT ÉLECTRIQUE, NOTAMMENT BICYCLETTE ÉLECTRIQUE, ET PROCÉDÉ DE FONCTIONNEMENT D'UN TEL VÉHICULE

(30) Priorität: 26.11.2014 DE 102014224066
(43) Veröffentlichungstag der Anmeldung: 04.10.2017
(73) Patentinhaber: Robert Bosch GmbH, 70442 Stuttgart (DE)
(72) Erfinder: BAUMGAERTNER, Daniel, 72070 Tuebingen (DE)
(86) Internationale Anmeldenummer: PCT/EP2015/071593
(87) Internationale Veröffentlichungsnummer: WO 2016/082962

(56) Entgegenhaltungen:
- EP-A1- 0 569 954
- EP-A1- 2 436 591
- EP-A1- 2 505 477
- EP-A1- 2 604 499
- EP-A1- 2 783 969
- DE-A1- 10 243 751
- DE-A1-102010 017 742

## Beschreibung

### Stand der Technik

Die vorliegende Erfindung betrifft ein mit Muskelkraft und/oder Pedalkraft betreibbares Fahrzeug, insbesondere ein Elektrofahrrad, sowie ein Verfahren zum Betreiben eines derartigen Fahrrads.

Bei hochwertigen Elektrofahrrädern werden üblicherweise Drehmomentsensoren zur Erfassung eines Fahrerdrehmoments verwendet. Das erfasste Fahrerdrehmoment wird dann bei einem Unterstützungswunsch des Fahrers durch einen elektrischen Antrieb proportional verstärkt. Hierdurch ergibt sich für den Fahrer ein natürliches Fahrgefühl, da ein erhöhtes Einbringen einer Kraft gleichzeitig zu einer erhöhten Unterstützung bis zu einer maximalen Unterstützung erfolgt. Kostengünstigere Elektrofahrräder haben häufig nur einen Pedaldrehzahlsensor. Hierbei erfolgt dann eine Unterstützung durch den elektrischen Antrieb meistens mit einem konstanten Drehmoment. Dadurch ist eine Dosierbarkeit des Motordrehmoments insbesondere bei hohen Unterstützungsstufen stark eingeschränkt. Weiterhin ist aus der gattungsgemässen DE 102010017742 A1 ein Verfahren zur Ansteuerung eines elektrischen Antriebs eines Fahrrads bekannt, bei dem das Fahrerdrehmoment geschätzt wird. Dieses Verfahren weist dadurch jedoch hohe Ungenauigkeiten auf, so dass eine Unterstützung durch den elektrischen Antrieb zu einem schlechten Fahrgefühl führen kann.

### Offenbarung der Erfindung

Das erfindungsgemäße mit Motorkraft und Motorpedalkraft betreibbare Fahrzeug, insbesondere ein Elektrofahrrad, mit den Merkmalen des Anspruchs 1 weist demgegenüber den Vorteil auf, dass auf einen Drehmomentsensor verzichtet werden kann und trotzdem eine Unterstützung durch den elektrischen Antrieb möglich wird, welcher ein hochwertiges Fahrgefühl ermöglicht. Die Unterstützung durch den elektrischen Antrieb kann dabei mit hoher Genauigkeit dosiert werden, so dass ein hervorragendes Fahrgefühl für einen Fahrer erreicht wird. Durch den Wegfall des teuren Drehmomentsensors kann die Erfindung besonders kostengünstig realisiert werden. Dies wird erfindungsgemäß dadurch erreicht, dass das Fahrzeug einen elektrischen Antrieb sowie eine Steuereinheit zum Ansteuern des elektrischen Antriebs aufweist. Ferner umfasst das Fahrzeug einen Kurbeltrieb mit einer ersten und zweiten Kurbel. Das Fahrzeug umfasst ferner eine erste Erfassungseinrichtung zur Erfassung eines zurückgelegten Kurbelwinkels wenigstens einer der Kurbeln, eine zweite Erfassungseinrichtung zur Erfassung einer Durchlaufzeit, mit welcher die Kurbel durch den zurückgelegten Kurbelwinkel bewegt wird, und eine dritte Erfassungseinrichtung zur Erfassung einer Zeit, in welcher eine vom Fahrer aufgebrachte Kraft über oder unter einem vorbestimmten Schwellenwert liegt. Da nur erfasst wird, ob die Fahrerkraft über oder unter dem Schwellenwert liegt, kann ein einfacher Sensor verwendet werden, welcher nur erfasst, ob die Fahrerkraft den Schwellenwert erreicht oder nicht. Die Steuereinheit ist nun eingerichtet, einen Quotienten der erfassten Zeit bezüglich der Fahrerkraft zur Durchlaufzeit oder der Zeit über dem Schwellenwert zur Zeit unter dem Schwellenwert zu berechnen und den elektrischen Antrieb in Abhängigkeit des errechneten Quotienten zu steuern. Der Quotient ist dabei ein Maß für ein vom Fahrer aufgebrachtes Fahrerdrehmoment. Selbstverständlich könnte der Quotient auch durch die Umkehrwerte bestimmt werden. Erfindungsgemäß kann somit ein Regelkreislauf realisiert werden, welcher keinen Drehmomentsensor aufweist. Durch eine Änderung einer Wahl des vorbestimmten Schwellenwerts, kann auf unterschiedliche Anforderungen von verschiedenen Fahrzeugherstellern einfach eingegangen werden. Es sei angemerkt, dass es selbstverständlich auch möglich ist, dass der elektrische Antrieb mittels der Steuereinheit, basierend auf einem Quotienten berechnet wird, bei dem die Zeitspanne unterhalb des Schwellenwerts liegt.

Die Unteransprüche zeigen bevorzugte Weiterbildungen der Erfindung.

Um eine Genauigkeit der Ansteuerung des elektrischen Antriebs zu verbessern, ist vorzugsweise die dritte Erfassungseinrichtung zur Erfassung einer vom Fahrer aufgebrachten Kraft am Pedal und/oder an der Kurbel und/oder Kurbelwelle angeordnet.

Weiter bevorzugt ist der vorbestimmte Kurbelwinkel ein fixer Wert. Dadurch kann insbesondere die erste Erfassungseinrichtung zur Erfassung der Durchlaufzeit für den vorbestimmten Kurbelwinkel sehr einfach ausgeführt werden. Der vorbestimmte Kurbelwinkel ist vorzugsweise ein Winkel für eine halbe Kurbelumdrehung, d.h., 180°. Besonders bevorzugt wird die halbe Kurbelumdrehung dabei zwischen dem oberen Totpunkt und dem unteren Totpunkt des Kurbeltriebs erfasst. Alternativ kann die Steuereinheit auch eingerichtet sein, Werte der Durchlaufzeit für mehrere zurückgelegte Kurbelwinkel zu erfassen. Bevorzugt wird dann ein Mittelwert der erfassten Werte gebildet.

Weiter bevorzugt ist die Steuereinheit eingerichtet, die erfassten Werte zur Detektion eines ungleichförmigen Tretens des Fahrers zu nutzen und dem Fahrer mitzuteilen. Dadurch kann eine Trainingsfunktion für den Fahrer bereitgestellt werden, so dass sich der Fahrer während des Fahrens einem optimalen runden Tritt annähert.

Weiter bevorzugt umfasst die zweite Erfassungseinrichtung ein Federelement, um eine vom Fahrer aufgebrachte Kraft zu bestimmen. Das Federelement kann beispielsweise derart vorgesehen werden, dass lediglich bei vollständigem Durchdrücken des Federelements ein entsprechendes Signal für das Fahrerdrehmoment zur Steuereinheit übermittelt wird, welches besagt, dass der Fahrer mit einem vorbestimmten Drehmoment, entsprechend z.B. einer Federkonstante des Federelements, gerade eine Kraft ausübt und somit über dem Schwellenwert liegt. Solange das Federelement nicht vollständig durchgedrückt ist, liegt das vom Fahrer aufgebrachte Drehmoment unter dem Schwellenwert. Die Federkonstante des Federelements ist vorzugsweise veränderbar, sodass der Schwellenwert individuell eingestellt werden kann.

Weiter bevorzugt ist der elektrische Antrieb mittels mehrerer Unterstützungsstufen betreibbar, wobei für jede Unterstützungsstufe ein anderer vorbestimmter Schwellenwert definiert ist. Dadurch kann eine deutlich bessere Ansteuerung des elektrischen Antriebs, abhängig von der jeweiligen Unterstützungsstufe, welche vom Fahrer gewählt wird, ermöglicht werden.

Das erfindungsgemäße Fahrzeug ist besonders bevorzugt ein Elektrofahrrad. Der elektrische Antrieb ist weiter bevorzugt im Bereich des Kurbeltriebs angeordnet. Dadurch kann ein Mittelmotorkonzept für das Fahrrad realisiert werden, was deutliche Vorteile gegenüber anderen Konzepten aufweist.

Ferner betrifft die vorliegende Erfindung ein Verfahren zum Betreiben eines mit Muskelkraft und/oder Pedalkraft betreibbaren Fahrzeugs, insbesondere eines Elektrofahrrads. Das erfindungsgemäße Verfahren umfasst dabei den Schritt des Erfassens einer Durchlaufzeit über einen vorbestimmten, zurückgelegten Kurbelwinkel des Erfassens einer vom Fahrer aufgebrachten Kraft und des Erfassens einer Zeit, in welcher die von einem Fahrer während des Durchlaufens des Kurbelwinkels aufgebrachte Kraft über einem Schwellenwert liegt. Anschließend wird ein Quotient der Zeit zur Durchlaufzeit berechnet und eine Ansteuerung des elektrischen Antriebs erfolgt in Abhängigkeit des derart errechneten Quotienten. Somit muss kein Drehmomentsensor am Fahrzeug angeordnet werden, um ein Fahrerdrehmoment zu erfassen. Somit werden auch die für das Fahrzeug vorhandenen Vorteile durch das erfindungsgemäße Verfahren erreicht.

Weiter bevorzugt ist eine Steuereinheit vorgesehen, welche überprüft, ob der Quotient zwischen der Zeit und der Durchlaufzeit in einem vorbestimmten Bereich liegt. Eine Ansteuerung des elektrischen Antriebs erfolgt dann in Abhängigkeit des Bereichs, in welchem der Quotient liegt. Hierdurch kann eine sehr genaue Dosierung des Drehmoments des elektrischen Antriebs realisiert werden, insbesondere wenn die Bereiche relativ klein gewählt sind.

Weiter bevorzugt weist der elektrische Antrieb mehrere Unterstützungsstufen auf, wobei jeder Unterstützungsstufe ein unterschiedlicher Bereich zugeordnet ist.

Gemäß einer weiteren bevorzugten Ausgestaltung des erfindungsgemäßen Verfahrens wird der zurückgelegte vorbestimmte Kurbelwinkel variiert. D.h., der Kurbelwinkel kann beispielsweise eine halbe Kurbelumdrehung betragen oder auch mehrere aufeinanderfolgende Kurbelumdrehungen betragen.

Der Kurbelwinkel wird vorzugsweise während der Fahrt des Fahrzeugs variiert und angepasst. Dadurch kann ein lernendes System bereitgestellt werden, so dass eine optimale Unterstützung durch den elektrischen Antrieb erreichbar ist.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht eines Fahrzeugs gemäß einem Ausführungsbeispiel der Erfindung,
- Figur 2: eine schematische Darstellung des Kurbeltriebs von Figur 1,
- Figur 3: eine schematische Darstellung eines durchlaufenen, vorbestimmten Kurbelwinkels, und
- Figur 4: Diagramme, welche ein Fahrerdrehmoment, einen Quotienten und einen Motordrehmoment über der Zeit zeigen.

### Ausführungsformen der Erfindung

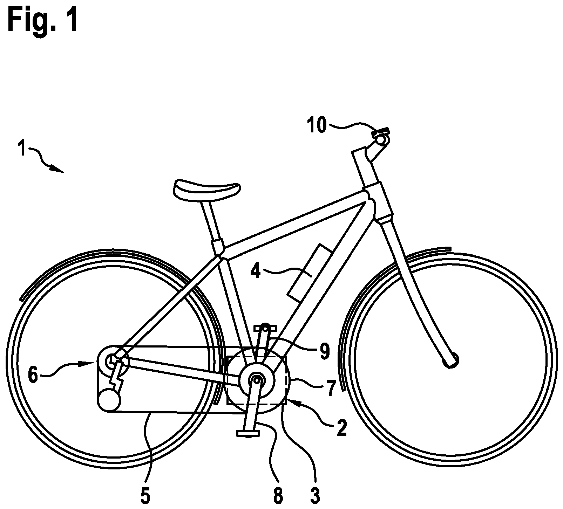

Nachfolgend wird unter Bezugnahme auf die Figuren 1 bis 4 ein Elektrofahrrad 1 gemäß einem bevorzugten Ausführungsbeispiel der Erfindung im Detail beschrieben.

Wie aus Figur 1 ersichtlich ist, umfasst das Elektrofahrrad 1 einen Kurbeltrieb 2 mit einer ersten und zweiten Kurbel 8, 9 und einen elektrischen Antrieb 3. Ein Akku ist mit dem Bezugszeichen 4 bezeichnet.

Ferner ist am Kurbeltrieb ein Kettenblatt 7 vorgesehen, in welches eine Kette 5 eingreift, so dass ein Drehmoment vom Kettenblatt 7 auf ein Ritzel an einer Schaltung 6 am Hinterrad des Elektrofahrrads übertragen werden kann.

Weiterhin umfasst das erfindungsgemäße Elektrofahrrad 1 eine Steuereinheit 10. Die Steuereinheit 10 ist mit dem elektrischen Antrieb 3 verbunden und ist eingerichtet, den elektrischen Antrieb 3 zu steuern, was nachfolgend im Detail erläutert wird.

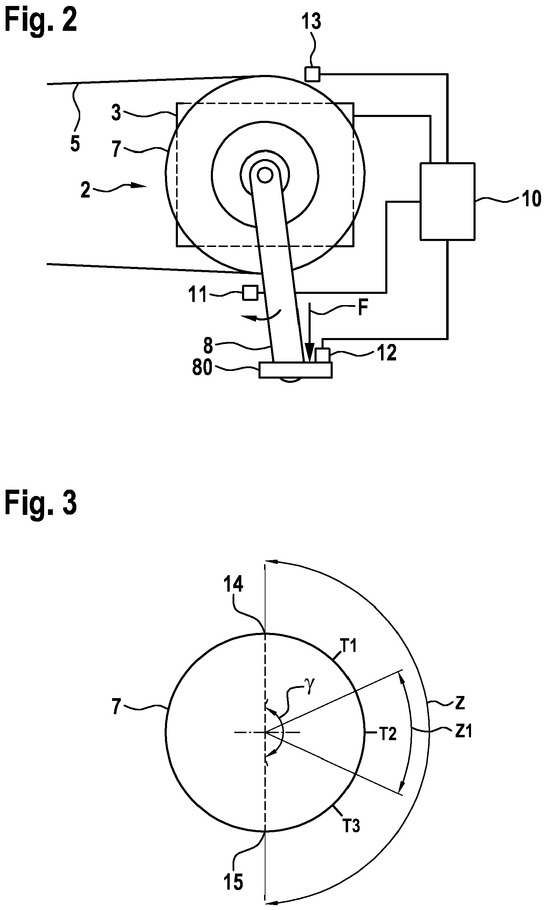

Das Elektrofahrrad umfasst ferner eine erste Erfassungseinrichtung 11 zur Erfassung einer Durchlaufzeit Z über einen vorbestimmten Kurbelwinkel γ einer der Kurbeln. Dies ist schematisch in Figur 3 gezeigt, wobei γ=180° ist. Ferner ist eine zweite Erfassungseinrichtung 12 zur Erfassung einer von einem Fahrer aufgebrachten Kraft F vorgesehen. Mittels dieser Kraft kann ein Fahrerdrehmoment, welches vom Fahrer aufgebracht wird, bestimmt werden. Die zweite Erfassungseinrichtung 12 ist dabei an einem Pedal 80 der ersten Kurbel 8 angeordnet. Weiterhin ist eine dritte Erfassungseinrichtung 13 vorgesehen, welche eine Zeit erfasst, in welcher die vom Fahrer aufgebrachte Kraft am Pedal 80 über oder unter einem vorbestimmten Schwellenwert S liegt.

Die Steuereinheit 10 ist nun eingerichtet, einen Quotienten Q zu berechnen, wobei der Quotient Q das Verhältnis der ersten Zeit Z1, in welcher der Fahrer die Kraft F über den Schwellenwert aufbringt, zur Durchlaufzeit Z, welche eine Kurbel zum Durchlaufen des vorbestimmten Kurbelwinkels γ benötigt, ist (Q=Z1/Z).

Die Steuereinheit 10 ist dabei ferner eingerichtet, den elektrischen Antrieb in Abhängigkeit des errechneten Quotienten Q zu steuern. Somit ist es erfindungsgemäß möglich, dass kein Drehmomentsensor am Elektrofahrrad 1 vorgesehen werden muss, um ein von einem Fahrer aufgebrachtes Drehmoment M1 zu erfassen. Durch die erfindungsgemäße geschickte Anordnung der drei Erfassungseinrichtungen 11, 12, 13 kann dies ohne Drehmomentsensor erfolgen.

Die zweite Erfassungseinrichtung 12 kann beispielsweise als Federelement ausgebildet sein. Dabei muss dann z.B. lediglich erfasst werden, ob eine vom Fahrer auf das Pedal 80 aufgebrachte Kraft ausreicht, um das Federelement vollständig zusammenzudrücken. Falls dies der Fall ist, ist die vom Fahrer aufgebrachte Kraft F größer als ein vorbestimmter Schwellenwert S, so dass die Zeiterfassung der Zeit Z1 beginnt, in welcher die vom Fahrer aufgebrachte Kraft F über dem Schwellenwert liegt. Sobald das Federelement wieder nicht mehr vollständig durch den Fahrer zusammengedrückt ist, ist der Endzeitpunkt der erfassten Zeit Z1 erreicht.

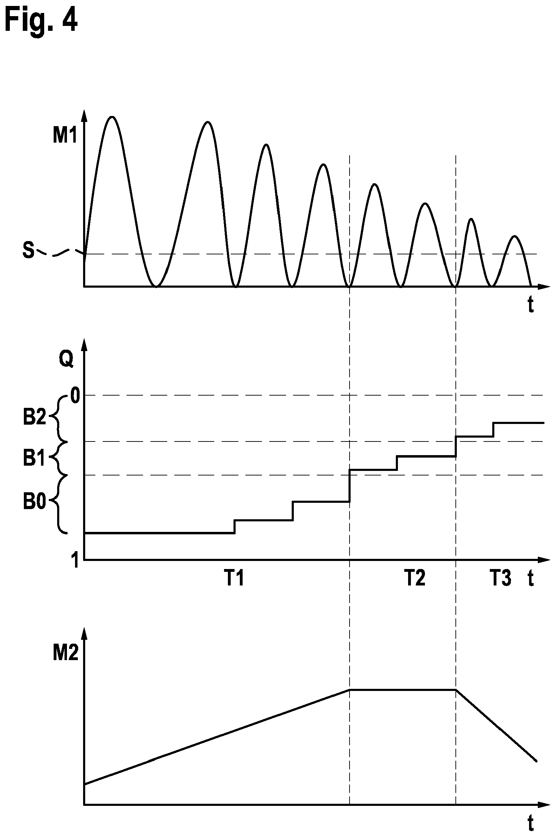

In Figur 4 ist im oberen Diagramm ein natürliches Fahrerdrehmoment M1 über der Zeit t dargestellt, welche näherungsweise sinusförmig ist. Mit dem Bezugszeichen S ist dabei der Schwellenwert bezeichnet, welcher zur Bestimmung der Zeit Z1 mittels der dritten Erfassungseinrichtung 13 dient.

Figur 3 zeigt schematisch den Kurbeltrieb 2, wobei der zurückgelegte Kurbelwinkel γ vom oberen Totpunkt 14 bis zum unteren Totpunkt 15 reicht. Hierbei ist in den Winkelbereichen, welche mit T1 und T3 gekennzeichnet sind, die Kraft F noch nicht hoch genug, um den Schwellenwert S zu überschreiten. Allerdings ist im Bereich T2 die Kraft F größer als der vorbestimmte Schwellenwert S. Erfindungsgemäß wird nun diese Zeitspanne (Zeit Z1), in welcher die Kraft F größer als der Schwellenwert S ist, erfasst. Ferner wird auch die Durchlaufzeit Z vom oberen Totpunkt 14 zum unteren Totpunkt 15 erfasst und ins Verhältnis zueinander gesetzt, um den Quotienten Q zu errechnen Q=Z1/Z). Anschließend erfolgt eine Steuerung des elektrischen Antriebs 3, basierend auf dem Quotienten Q.

Das mittlere Diagramm von Figur 4 zeigt schematisch über eine halbe Pedalumdrehung den Quotienten Q über der Zeit t. Im Bereich B1 ist dabei ein optimaler Bereich für den Fahrer vorhanden, in welchem eine feinfühlige, d.h., unmerkliche Unterstützung durch den elektrischen Antrieb 3 möglich ist. Wenn der Quotient Q zu klein ist, muss das Motordrehmoment M2 hochgefahren werden (Bereich B0), wie im dritten Diagramm von Figur 4 angedeutet, da ein Fahrerdrehmoment zu groß ist. Wenn das Fahrerdrehmoment zu klein ist (Bereich B2), kann das Motordrehmoment M2 heruntergefahren werden. Das Motordrehmoment M2 ist im untersten Diagramm von Fig. 4 über der Zeit dargestellt.

Es sei angemerkt, dass statt einer halben Pedalumdrehung auch mehrere Pedalumdrehungen betrachtet werden können. Insbesondere kann hier ein Mittelwert ermittelt werden und beispielsweise eine gleichförmige Kurbelbewegung durch den Fahrer unterstützt werden.

Statt die Zeitspanne T2 am Kurbelwinkel γ zu betrachten, ist es selbstverständlich auch möglich, die beiden Zeitspannen T1 und T3 zu addieren, in welcher die Kraft des Fahrers den Schwellenwert nicht übersteigt.

Auch ist es weiterhin denkbar, dass eine mathematische Funktion, z.B. in Form eines ideal sinusförmigen Drehmomentverlaufs, als Referenz zugrunde gelegt wird, mit welcher die Steuereinheit 10 eine Steuerung des elektrischen Antriebs 3 ermöglicht.

## Patentansprüche

1. Mit Muskelkraft und/oder Pedalkraft betreibbares Fahrzeug, insbesondere Elektrofahrrad, umfassend
- einen elektrischen Antrieb (3),
- eine Steuereinheit (10) zum Ansteuern des elektrischen Antriebs (3),
- einen Kurbeltrieb (2) mit einer ersten Kurbel (8) und einer zweiten Kurbel (9) zum Antreiben des Fahrzeugs,
**gekennzeichnet durch**
- eine erste Erfassungseinrichtung (11) zur Erfassung einer Durchlaufzeit (Z) über einen vorbestimmten Kurbelwinkel (y),
- eine zweite Erfassungseinrichtung (12) zur Erfassung einer von einem Fahrer aufgebrachten Kraft (F), und
- eine dritte Erfassungseinrichtung (13) zur Erfassung einer ersten Zeit (Z1), in welcher die vom Fahrer aufgebrachte Kraft (F) über einem Schwellenwert (S) liegt, oder einer zweiten Zeit (Z2), in welcher die vom Fahrer aufgebrachte Kraft unter dem Schwellenwert liegt,
- wobei die Steuereinheit (10) eingerichtet ist, einen Quotienten (Q) aus der ersten Zeit (Z1) zur Durchlaufzeit (Z), oder einen Quotienten der zweiten Zeit (Z2) zur Durchlaufzeit (Z), oder einen Quotienten der ersten Zeit (Z1) zur zweiten Zeit (Z2) zu berechnen, und
- wobei die Steuereinheit (10) ferner eingerichtet ist, den elektrischen Antrieb (3) in Abhängigkeit des errechneten Quotienten (Q) zu steuern.

2. Fahrzeug nach Anspruch 1, **dadurch gekennzeichnet, dass** die zweite Erfassungseinrichtung (12) an einem Pedal (80) und/oder einer der Kurbeln (8, 9) oder einer Kurbelwelle angeordnet ist.

3. Fahrzeug nach einem der vorhergehenden Ansprüche, **dadurch gekennzeichnet, dass** der vorbestimmte Kurbelwinkel (y), über welchen die Durchlaufzeit (Z) erfasst wird, ein fester Wert ist, insbesondere eine halbe Kurbelumdrehung.

4. Fahrzeug nach einem der vorhergehenden Ansprüche, **dadurch gekennzeichnet, dass** die Steuereinheit (10) eingerichtet ist, Werte für die Durchlaufzeit (Z) bei mehreren zurückgelegten Kurbelwinkeln zu erfassen und insbesondere einen Mittelwert zu bilden.

5. Fahrzeug nach einem der vorhergehenden Ansprüche, **dadurch gekennzeichnet, dass** die Steuereinheit (10) eingerichtet ist, die erfassten Werte zur Detektion eines ungleichförmigen Tretvorgangs zu verwenden und dem Fahrer, insbesondere auf einem Display, mitzuteilen.

6. Fahrzeug nach einem der vorhergehenden Ansprüche, **dadurch gekennzeichnet, dass** die zweite Erfassungseinrichtung (12) ein Federelement umfasst, insbesondere in Federelement mit veränderbarer Federkonstante, mittels dessen eine vom Fahrer aufgebrachte Kraft bestimmbar ist.

7. Fahrzeug nach Anspruch 6, **dadurch gekennzeichnet, dass** eine vollständige Komprimierung des Federelements den Schwellenwert (S) des Fahrerdrehmoments definiert.

8. Fahrzeug nach einem der vorhergehenden Ansprüche, **dadurch gekennzeichnet, dass** der elektrische Antrieb (3) mittels mehrerer Unterstützungsstufen betreibbar ist, wobei für jede Unterstützungsstufe ein anderer vorbestimmten Schwellenwert (S) gewählt ist.

9. Verfahren zum Betreiben eines mit Motorkraft und/oder Pedalkraft betreibbaren Fahrzeugs, insbesondere Elektrofahrrads, mit einem elektrischen Antrieb (3), einem Kurbeltrieb (2) mit einer ersten und zweiten Kurbel (8, 9) und einer Steuereinheit (10), umfassend die Schritte
- Erfassen einer Durchlaufzeit (Z) über einen vorbestimmten Kurbelwinkel am Kurbeltrieb (2),
- Erfassen einer von einem Fahrer aufgebrachten Kraft (F),
- Erfassen einer ersten Zeit (Z1), in welcher die vom Fahrer aufgebrachte Kraft über einem Schwellenwert (S) liegt, oder Erfassen einer zweiten Zeit (Z2), in welcher die vom Fahrer aufgebrachte Kraft unter dem Schwellenwert (S) liegt,
- Berechnen eines Quotienten (Q) der ersten Zeit (Z1) zur Durchlaufzeit (Z) mittels der Funktion Q=Z1/Z, oder eines Quotienten der zweiten Zeit (Z2) zur Durchlaufzeit (Z) mittels der Funktion Q=Z2/Z, oder eines Quotienten der ersten Zeit (Z1) zur zweiten Zeit (Z2) mittels der Funktion Q=Z1/Z2, wobei der Quotient (Q) ein Maß für ein Fahrerdrehmoment (M1) darstellt, und
- Ansteuern des elektrischen Antriebs (3) in Abhängigkeit des errechneten Quotienten (Q).

10. Verfahren nach Anspruch 9, **dadurch gekennzeichnet, dass** die Steuereinheit (10) überprüft, ob der Quotient (Q) in einen vorbestimmten Bereich (B1) fällt und den elektrischen Antrieb (3) in Abhängigkeit des Bereichs (B1) ansteuert.

11. Verfahren nach Anspruch 9 oder 10, **dadurch gekennzeichnet, dass** der elektrische Antrieb (3) mehrere Unterstützungsstufen aufweist und jeder der Unterstützungsstufen ein unterschiedlicher Schwellenwert (S) zugeordnet ist.

12. Verfahren nach einem der Ansprüche 9 bis 11, **dadurch gekennzeichnet, dass** der zurückzulegende, vorbestimmte Kurbelwinkel (y) während des Betriebs variiert wird.

## Claims

1. Vehicle which can be operated with muscle force and/or pedal force, in particular an electric bicycle, comprising
- an electric drive (3),
- a control unit (10) for actuating the electric drive (3),
- a crank drive (2) with a first crank (8) and a second crank (9) for driving the vehicle,
**characterized by**
- a first detection device (11) for detecting a running time (Z) over a predetermined crank angle (γ),
- a second detection device (12) for detecting a force (F) which is applied by a rider, and
- a third detection device (13) for detecting a first time (Z1) in which the force (F) applied by the rider is above a threshold value (S), or a second time (Z2) in which the force applied by the rider is below the threshold value,
- wherein the control unit (10) is configured to calculate a quotient (Q) of the first time (Z1) with respect to the running time (Z), or a quotient of the second time (Z2) with respect to the running time (Z), or a quotient of the first time (Z1) with respect to the second time (Z2) and
- wherein the control unit (10) is also configured to control the electric drive (3) as a function of the calculated quotient (Q).

2. Vehicle according to Claim 1, **characterized in that** the second detection device (12) is arranged on a pedal (80) and/or on one of the cranks (8, 9) or on a crankshaft.

3. Vehicle according to one of the preceding claims, **characterized in that** the predetermined crank angle (γ) over which the running time (Z) is detected is a fixed value, in particular half a crank revolution.

4. Vehicle according to one of the preceding claims, **characterized in that** the control unit (10) is configured to detect values for the running time (Z) at a plurality of crank angles which have been passed through, and in particular to form a mean value.

5. Vehicle according to one of the preceding claims, **characterized in that** the control unit (10) is configured to use the detected values to detect a non-uniform pedalling process and to communicate this to the rider, in particular on a display.

6. Vehicle according to one of the preceding claims, **characterized in that** the second detection device (12) comprises a spring element, in particular in spring element with variable spring constant, by means of which a force which is applied by the rider can be determined.

7. Vehicle according to Claim 6 **characterized in that** complete compression of the spring element defines the threshold value (S) of the torque provided by the rider.

8. Vehicle according to one of the preceding claims, **characterized in that** the electric drive (3) can be operated by means of a plurality of assistance stages, wherein another predetermined threshold value (S) is selected for each assistance stage.

9. Method for operating a vehicle which can be operated with motor force and/or pedal force, in particular an electric bicycle,having an electric drive (3), a crank drive (2) with a first crank (8) and a second crank (9) and a control unit (10), comprising the steps
- detecting a running time (Z) over a predetermined crank angle at the crank drive (2),
- detecting a force (F) which is applied by a rider,
- detecting a first time (Z1) in which the force which is applied by the rider is above a threshold value (S), or
detecting a second time (Z2) in which the force which is applied by the rider is below the threshold value (S),
- calculating a quotient (Q) of the first time (Z1) with respect to the running time (Z) by means of the function Q=Z1/Z or a quotient of the second time (Z2) with respect to the running time (Z) by means of the function Q=Z2/Z, or a quotient of the first time (Z1) with respect to the second time (Z2) by means of the function Q=Z1/Z2 wherein the quotient (Q) constitutes a measure of a torque (M1) provided by a rider, and
- actuating the electric drive (3) as a function of the calculated quotient (Q).

10. Method according to Claim 9, **characterized in that** the control unit (10) checks whether the quotient (Q) occurs in a predetermined range (B1), and said control unit (10) actuates the electric drive (3) as a function of the range (B1).

11. Method according to Claim 9 or 10, **characterized in that** the electric drive (3) has a plurality of assistance stages and a different threshold value (S) is assigned to each of the assistance stages.

12. Method according to one of Claims 9 to 11, **characterized in that** the predetermined crank angle (γ) which is to be passed through is varied during operation.

## Revendications

1. Véhicule pouvant être propulsé par force musculaire et/ou par force de pédalage, notamment bicyclette électrique, comprenant
- un mécanisme de propulsion électrique (3),
- une unité de commande (10) destinée à piloter le mécanisme de propulsion électrique (3),
- une transmission à manivelle (2) dotée d'une première manivelle (8) et d'une deuxième manivelle (9) servant à la propulsion du véhicule,
**caractérisé par**
- un premier dispositif de détection (11) destiné à détecter un temps de passage (Z) sur un angle de manivelle (y) prédéfini,
- un deuxième dispositif de détection (12) destiné à détecter une force (F) appliquée par un conducteur, et
- un troisième dispositif de détection (13) destiné à détecter un premier temps (Z1) pendant lequel la force (F) appliquée par le conducteur est supérieure à une valeur de seuil (S) ou un deuxième temps (Z2) pendant lequel la force appliquée par le conducteur est inférieure à la valeur de seuil,
- l'unité de commande (10) étant configurée pour calculer un quotient (Q) du premier temps (Z1) par le temps de passage (Z), ou un quotient (Q) du deuxième temps (Z2) par le temps de passage (Z), ou un quotient du premier temps (Z1) par le deuxième temps (Z2), et
- l'unité de commande (10) étant en outre configurée pour commander le mécanisme de propulsion électrique (3) en fonction du quotient (Q) calculé.

2. Véhicule selon la revendication 1, **caractérisé en ce que** le deuxième dispositif de détection (12) est disposé sur une pédale (80) et/ou l'une des manivelles (8, 9) ou un arbre de manivelle.

3. Véhicule selon l'une des revendications précédentes, **caractérisé en ce que** l'angle de manivelle (y) prédéfini sur lequel est détecté le temps de passage (Z) est une valeur fixe, notamment un demi tour de manivelle.

4. Véhicule selon l'une des revendications précédentes, **caractérisé en ce que** l'unité de commande (10) est configurée pour acquérir des valeurs pour le temps de passage (Z) lors de plusieurs angles de manivelle parcourus et notamment former une valeur moyenne.

5. Véhicule selon l'une des revendications précédentes, **caractérisé en ce que** l'unité de commande (10) est configurée pour utiliser les valeurs acquises pour la détection d'une opération de pédalage non uniforme et d'informer le conducteur, notamment sur un afficheur.

6. Véhicule selon l'une des revendications précédentes, **caractérisé en ce que** le deuxième dispositif de détection (12) comporte un élément à ressort, notamment dans élément à ressort ayant une constante de ressort variable, au moyen duquel peut être déterminée la force appliquée par le conducteur.

7. Véhicule selon la revendication 6, **caractérisé en ce qu'**une compression complète de l'élément à ressort définit la valeur de seuil (S) du couple du conducteur.

8. Véhicule selon l'une des revendications précédentes, **caractérisé en ce que** le mécanisme de propulsion électrique (3) peut être utilisé au moyen de plusieurs niveaux d'assistance, une autre valeur de seuil (S) prédéfinie étant sélectionnée pour chaque niveau d'assistance.

9. Procédé pour faire fonctionner un véhicule pouvant être propulsé par force motorisée et/ou par force de pédalage, notamment bicyclette électrique, comprenant un mécanisme de propulsion électrique (3), une transmission à manivelle (2) dotée d'une première et d'une deuxième manivelle (8, 9) et une unité de commande (10), comprenant les étapes suivantes :
- détection d'un temps de passage (Z) sur un angle de manivelle au niveau de la transmission à manivelle (2),
- détection d'une force (F) appliquée par un conducteur,
- détection d'un premier temps (Z1) pendant lequel la force appliquée par le conducteur est supérieure à une valeur de seuil (S) ou détection d'un deuxième temps (Z2) pendant lequel la force appliquée par le conducteur est inférieure à la valeur de seuil (S),
- calcul d'un quotient (Q) du premier temps (Z1) par le temps de passage (Z) au moyen de la fonction Q = Z1/Z, ou d'un quotient du deuxième temps (Z2) par le temps de passage (Z) au moyen de la fonction Q = Z2/Z, ou d'un quotient du premier temps (Z1) par le deuxième temps (Z2) au moyen de la fonction Q = Z1/Z2, le quotient (Q) représentant une mesure pour un couple de conducteur (M1), et
- commande du mécanisme de propulsion électrique (3) en fonction du quotient (Q) calculé.

10. Procédé selon la revendication 9, **caractérisé en ce que** l'unité de commande (10) vérifie si le quotient (Q) se trouve dans une plage (B1) prédéfinie et commande le mécanisme de propulsion électrique (3) en fonction de la plage (B1).

11. Procédé selon la revendication 9 ou 10, **caractérisé en ce que** le mécanisme de propulsion électrique (3) possède plusieurs niveaux d'assistance et une valeur de seuil (S) différente est associée à chacun des niveaux d'assistance.

12. Procédé selon l'une des revendications 9 à 11, **caractérisé en ce que** l'angle de manivelle (y) prédéfini parcouru varie pendant l'utilisation.
